Europäisches Patentamt

European Patent Office

Office européen des brevets

(11) Publication number: **0 272 730**
A1

## (12) EUROPEAN PATENT APPLICATION

(21) Application number: 87202351.0

(22) Date of filing: 27.11.87

(51) Int. Cl.⁴: **B23B 31/20**

(30) Priority: 05.12.86 IT 2258586
13.10.87 IT 2223887

(43) Date of publication of application:
29.06.88 Bulletin 88/26

(84) Designated Contracting States:
AT BE CH DE ES FR GB GR IT LI LU NL SE

(71) Applicant: KOWAL TOOLS di MOLTENI
Cornelio
Via Fumagalli, 1
I-22040 Garbagnate Monastero Province of
Como(IT)

(72) Inventor: Molteni, Cornelio
Via Fumagalli, 1
I-22040 Garbagnate Monastero Como(IT)

(74) Representative: Riccardi, Sergio
Riccardi & Co. Via Macedonio Melloni, 32
I-20129 Milano(IT)

(54) **System for locking the collet spindle for tools.**

(57) The invention consists of a spindle collet locking
system for machine tools, based on a chamber filled
with an elastic medium capable of exerting a very
high compression force on the spindle to lock it
around the collet, externally controlled by a me-
chanical control which can be manually operated by
the machine operator without effort, and which does
not create the dangerous torsional stresses which
arise in traditional spindles.

Fig.3

## SYSTEM FOR LOCKING THE COLLET SPINDLE FOR TOOLS

The invention described here concerns a system for locking the collet spindle for machine tools which permits the exertion of considerable chucking force with minimum physical effort on the part of the machine operator, thus representing a considerable technical step forward compared to the systems currently in use.

As is well-known, the split coned sleeve or collet which holds the tools is inserted into the appropriate slot of the spindle and is locked therein generally by means of mechanical systems which require physical force on the part of the machine operator. Normally, the sleeve is subjected to a large amount of mechanical stress and, therefore, is subject to wear and tear and all the mechanical defects which components which suffer high stress are normally subject to. In particular, in traditional spindles closed by ring nuts and normally closed in a rough manner with blows of a hammer with obvious danger of damage, dangerous torsional stresses are created and the precision of the spindle locking is soon compromised.

The system of this invention is however based on the innovative principle of utilising an elastic fluid to close the spindle, creating a formidable chucking force generated by a very high aerodynamic compression ratio inside the spindle, actuated externally by a simple screw located on the external diameter of the spindle itself.

This hydraulically closed spindle with a vertical piston also permits the utilisation on the same spindle of milling cutters with cylindrical tool shanks in a wide range of diameters by means of the insertion of simple reduction gears.

In the present embodiment, the body of the spindle is provided with a chamber filled with an elastic medium which is capable of exerting compression force on a double piston which, in its turn, acts on a locking unit in the form of a double or single split cone sleeve or collet in order to lock this around the main cone. The compression force of the elastic medium is adjusted by means of a mechanical control or screw which is turned manually by the operator without any effort.

A further aspect of this invention is that the system permit both locking with change of collet according to diameter and direct locking on a wide range of different diameters by a sliding conic sleeve which is self-positioning on tools of all diameters, without the need to change the collet chuck, exercising a small amount of pressure and eliminating the need for manual tightening or tightening with a wrench.

The characteristics, objectives and advantages of the system according to this invention will become evident from the following detailed description of two preferential embodiments, given as a non-limiting example of the scope of this discovery, referring to the attached drawings in which:

Figures 1 and 3 show vertical cross-sections of the two embodiments of the spindle equipped with the locking system of this invention and

Figures 2 and 4 are transversal cross-sections of the layout of the passages for the elastic compression medium, corresponding respectively to the embodiments shown in Figures 1 and 3.

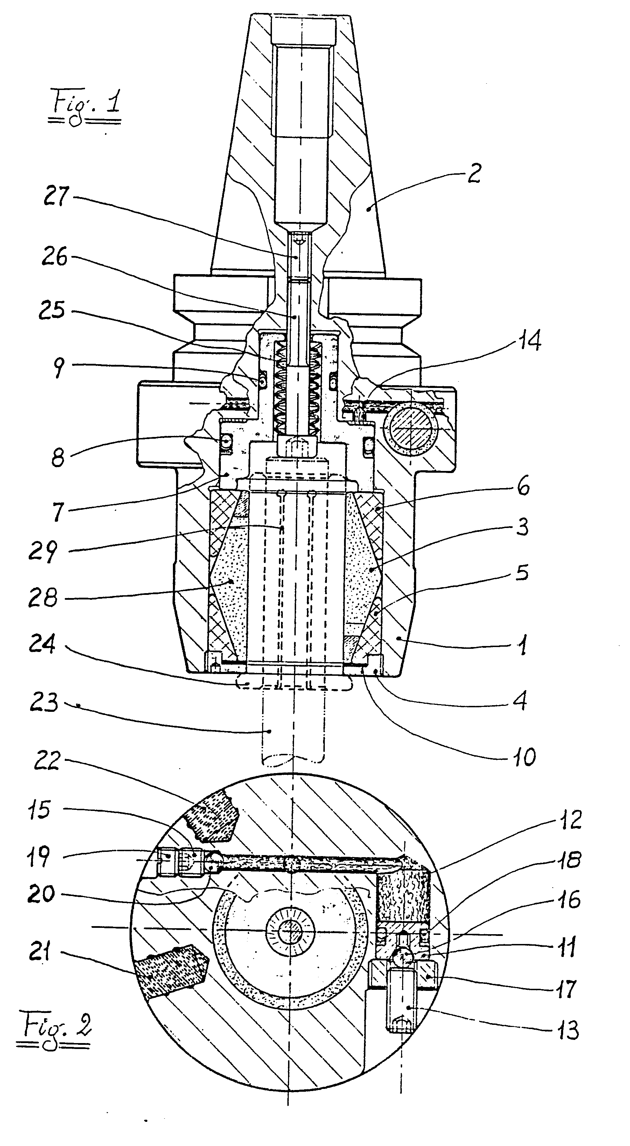

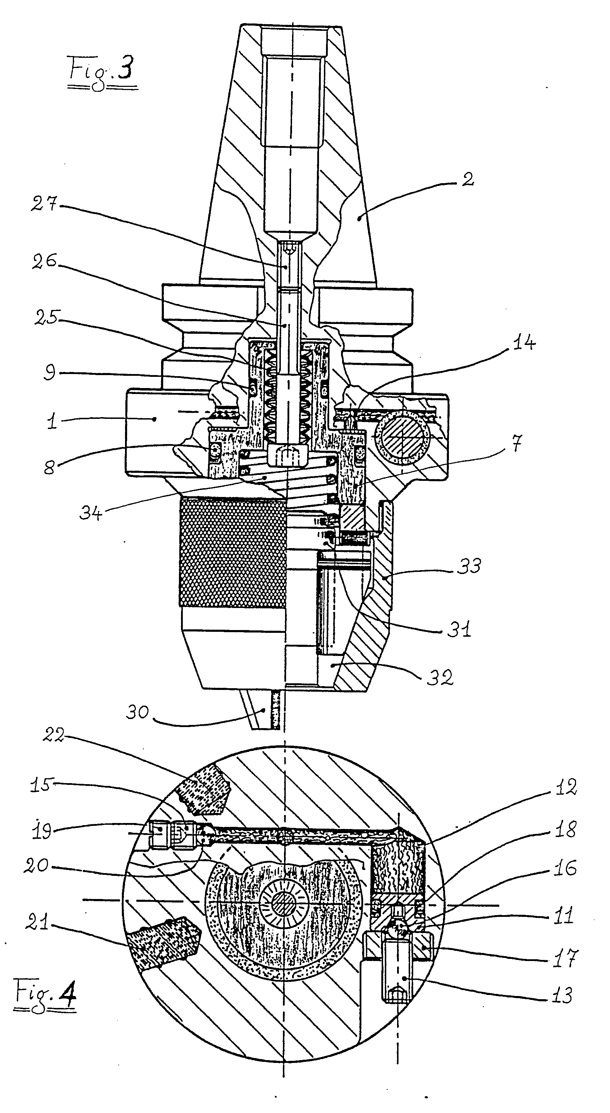

Referring to the attached drawings, the spindle which can be used to implement the system of the invention described here can be of any existing type and, therefore, its body 1 can terminate above with a collet 2 for any type and size of machine tool, for example ISO, Morse, cylindrical etc. At the bottom, the body 1 has an ample slot to accept the main collet 3 (Figure 1) or (as in Figure 3) three jaws 30, the support pin 31 and the collet chuck 32, which lock onto the central coupling, thus securing the tool inside itself. The tool is generally cylindrical and can be of an existing size and type. The main collet chuck 3 of the spindle in the first embodiment is shown in Figure 1. The shape here is a double convex cone, but it could be a double concave cone or even a single convex cone or a single concave cone. It has alternating cuts 28 which permit it to be compressed. The collet chuck is held below by a locking ring nut 4 with its related washer 10. To permit locking of tools 23 of a wide range of diameters, extractable collet chucks 24 for the various permissible diameters have been provided which have unilateral cuts 29 for chucking purposes.

The double collet 3 is clamped with exceptional force by the lower collet chuck 5 and the upper collet chuck 6 which are compressed by the double piston 7 which runs inside the special chamber hollowed out in the body 1 of the spindle.

In the embodiment illustrated in Figure 3 the collet chuck is held at the bottom by a locking ring nut 33. To clamp tools of a wide range of diameters, the jaws 30, the collet chuck 32 and the support pin 31 must be allowed to run within their housing, exerting light pressure on them and raising them upwards. To return to the starting point, the tool simply has to be removed from the jaws 30. The spring 34, always under light downward pressure, returns the jaws 30 to the starting point.

A high ratio of compression thrust is imparted to the double piston 7 by the elastic material which passes through aperture 14 to fill the area between the lower high pressure gasket 9. The elastic material comes from the reserve of elastic material contained in cylinder 12, in which the piston 11 moves axially not circularly through the high pressure gasket 18, manually controlled by the operator by means of the control pin 13, which meshes into the central thread of the threaded stop ring 17 which acts on the piston 11 by means of the ball bearing 16.

The fact that the hydraulic circuit contains elastic material is essential for the functioning of the system. Generally, the material used is oil, but any other suitable material, for example, microbearings could also be used. The system must be fitted with an external draining device constituted by a ball sealer 20, a pin valve 15 and an associated security dowel 19 which permits the closing stroke of the double piston 7 and, therefore, of the collet chuck to be exploited to the full.

The return of the double piston 7 is effected by means of a group of Belleville washers 24, arranged around the static crew 24 which is equipped with a stop dowel 27.

The Belleville washers 25, combined with the high level of tapering of the double biconic collet chuck 32, guarantee that the collet opens rapidly and, therefore, that there is rapid tool change. The body of the collet is also provided with closing plugs 21 and 22 for the balancing holes in the side opposite to that in which the cylinder 12 is located.

To permit the double piston 7 to run freely, eliminating possible friction, the high pressure gaskets have opposed teeth of a very reduced size capable of withstanding very high pressures without being subject to overheating since they are manufactured from special compounds. Since the elastic material which effects the closing of the collet chuck is enclosed within the upper portion of the spindle, it is not subject to loss of pressure.

Special emphasis must be given to the fact that this locking system could also be arranged in another position inside the body of the spindle and, therefore, it could be located at the side of the main collet chuck or underneath it instead of above as shown in the drawing of the preferential embodiment of the system of this invention. A system of this type can exert an exceptionally high clamping force of between 15 and 45 tons or even more.

The system locks the tool securely even under the most severe operating conditions, ensuring that the tool does not slip, does not rotate and is not subjected to torsion or deformation and that this is combined with maximum case of mounting and dismounting and that no maintenance or special care is required.

From the preceding description it is clear that the system of the present invention fully meets all the established objectives producing considerable advantages in tool locking and it is also clear that numerous modifications of elements or details could be made to the system of this invention without altering the essentials or the objectives of this invention and without prejudice to the coverage of its protection as specified in the definitions of the attached claims.

## Claims

1. Collet spindle locking system, characterised by the fact that the body of the spindle is provided with a chamber filled with an elastic medium capable of exerting a compression force on a double piston which in turn acts on a locking unit in the form of a double or single slotted collet, in order to tighten it around the main collet chuck, the compression force of the elastic medium being regulated by means of a mechanical control device or control pin which can be manually operated by the machine operator with no effort.

2. System according to claim 1, characterised by the fact that the pressure medium is an incompromessible fluid such as oil or a material with flowability such as microbearings.

3. System according to claim 1, characterised by the fact that the double piston moves within the pressure chamber of the spindle, guided by high pressure gasket with opposed teeth made from special compounds.

4. System according to claim 1, characterised by the fact that the hydraulic system of the elastic system is provided with an external draining device, constituted by a ball sealer, a draining pin valve and an associated security dowel.

5. System according to claim 1, characterised by the fact that the regulation of the pressure in the hydraulic circuit of the spindle is effected by means of a piston which runs without rotation inside a cylinder hollowed out inside the body of the spindle which is connected to the chamber itself, operating by means of a control pin which can be operated manually outside the spindle with no effort on the part of the machine operator by means of a simple appropriate tool.

6. System according to claim 1, characterised by the fact that the return stroke of the double piston is effected by means of a group of Belleville washers arranged around the aial support screw of the tool.

7. System according to one or more of the preceding claims, characterised by the fact that it also includes extractable reduction collet chucks for the tool shank, to lock tools of a wide range of diameters, equipped with unilateral cuts for tightening them.

8. System aocording to one or more of the preceding claims, characterised by the fact that the biconic double collet is provided with alternating bilateral slots for tightening it and that it is highly tapered to facilitate rapid opening.

9. System according to one or more of claims 1-6 characterised by the fact that the cavity which houses the tool also includes three jaws, a support pin and a conical ring nut, which free the tool raising it upwards with a light pressure counterposed by an internal return spring which is constantly maintained under light downward pressure, thus eliminating any need to change the chucks and the screws either manually or with wrenches.

10. System according to claim 9, characterised by the fact that the locking jaws are rapid slide both for spindle closing and for spindle opening.

0 272 730

Fig. 1

Fig. 2

Fig.3

Fig.4

0 272 730

European Patent Office

# EUROPEAN SEARCH REPORT

Application Number

EP 87 20 2351

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | WO-A-8 601 758 (MOLTENI) * claims 1-12; figure * | 1,2,5 | B 23 B 31/20 |
| A | | 3,4 | |
| A | DE-A-1 552 269 (EGGLI-WEIGEL) * claims 1, 2; figure * | 1 | |
| A | CH-A- 382 517 (FRAISA AG) * claim; sub-claims 1-3; figures 1, 2 * | 1 | |
| A | US-A-4 422 653 (PIOTROWSKI) * claims 1-3; column 3, lines 47-52; figures 2, 7, 12 * | 1-7 | |
| A | DE-A-2 639 214 (RÖHM) * claim 1; figure * | 1,9,10 | |
| A | DE-A-3 136 149 (A. OTT) * claim 1; figure 1; page 19 * | 1,9,10 | |

TECHNICAL FIELDS SEARCHED (Int. Cl.4)

B 23 B 31/00
B 23 Q 3/06

The present search report has been drawn up for all claims

| Place of search | Date of completion of the search | Examiner |
|---|---|---|
| BERLIN | 25-02-1988 | BERNAS Y.N.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)